# EUROPEAN PATENT SPECIFICATION

(11) **EP 2 703 523 B1**
(45) Date of publication and mention of the grant of the patent: **12.10.2016**
(21) Application number: 12182508.7
(22) Date of filing: 31.08.2012
(51) Int. Cl.: C25C 3/12, C04B 35/52, C04B 35/524, C04B 35/528, C04B 35/532

(54) **Improved carbon electrode manufacturing**
Verbesserte Kohlenstoffelektrodenherstellung
Fabrication d'une électrode de carbone améliorée

(43) Date of publication of application: 05.03.2014
(73) Proprietor: RÜTGERS Germany GmbH, 44579 Castrop-Rauxel (DE)
(72) Inventor: Steinmetz, Henri, 5722 Aspelt (LU); Boenigk, Winfried Dr., 59348 Lüdinghausen (DE); Kuhnt, Christopher, 58452 Witten (DE)
(74) Representative: Cohausz & Florack

(56) References cited:
- GB-A- 884 155
- US-A- 4 188 279
- US-A- 5 688 155
- JOSE MIGUEL MARTIN MARTINEZ ED - CHAUDHURY AND A V POCIUS [EDITORS] M: "Chapter 13 - Rubber base adhesives [extract]", 1 January 2002 (2002-01-01), ADHESION SCIENCE AND ENGINEERING, ELSEVIER B.V, NETHERLANDS, PAGE(S) 612 - 615, XP009166867, ISBN: 978-0-444-51140-9 * page 612 - page 614 *
- Thomas A. Golubic ET AL: "HIGH SOFTENING POINT COAL TAR PITCH AS ANODE BINDER PITCH", Light metals, 1 January 2010 (2010-01-01), pages 909-911, XP055052498, Retrieved from the Internet: URL:http://my.alacd.com/tms/2010/Electrode Technology for Aluminum Production/0909.pdf [retrieved on 2013-02-06]
- "Anode Manufacturing" In: K. L. Hulse: "Anode Manufacture : Raw Materials, Formulation and Processing Parameters", April 2000 (2000-04), R&D Carbon Ltd. pages 35-52,
- C. LAVOIE; E. BERGERON; A. PROULX: "ALCAN ALMA New paste plant start-up and early operation", LIGHT METALS, 2003, pages 555-560,
- M. KEMPKES; W. MEIER: "New concept for a green anode plant", LIGHT METALS, 2008, pages 919-922,
- BEUTH - NORMEN RICHTLINIEN: 'FROM DIN-TASCHENBUCH 221', vol. 3, May 1998 deel 'KOHLENSTOFFMATERIALEN EIGENSCHAFTEN ANFORDERUNGEN PRüFUNGEN', pages 317 - 319
- KIRSTINE LOUISE HULSE: 'ANODE MANUFACTURE', April 2000, R&D, ISBN 3-9521028-5-7 deel 'RAW MATERIALS, FORMULATION AND PROCESSING PARAMETERS', pages 34 - 53

## Description

### TECHNICAL FIELD OF THE INVENTION

The invention refers to a method for the manufacture of carbon electrodes and other carbon artefacts.

### BACKGROUND OF THE INVENTION

The predominant use of carbon anodes is to act as reducing agent in aluminum production according to Hall-Héroult. Initially Soederberg anodes were produced from anode pastes sintering and carbonizing on the electrolysis cell. The capture of PAHs emitted from binder pitch when carbonizing proved to be difficult. Today, state-of-the-art anodes are manufactured in a carbon plant separated from the electrolysis cells. Typically coal tar pitch with a softening point Mettler (SPM; ISO 5940-2) of 105-120°C agglomerates petroleum coke. Coke and pitch are mixed for that purpose at 60-100°C above the pitch SPM. The high temperature is needed to allow the pitch viscosity getting sufficiently low to wet the coke grains. The resulting paste is cooled with water by about 40-60°C and pressed or compacted by vibration to form green anodes. The green anodes are removed from the mould, cooled with water and stored until being packed in the baking furnace for carbonization.

The anode manufacturing process represents a significant part of alumina reduction costs. Even small improvements of the overall process will have a significant effect on overall efficiency. This explains that significant effort is invested to increase the efficiency of anode production, as shown, for example, in C. Lavoie, E. Bergeron, A. Proulx, "ALCAN ALMA New paste plant start-up and early operation", Light Metals, 555-560 (2003) and M. Kempkes, W. Meier "New concept for a green anode plant", Light Metals, 919-922 (2008).

Still, the current process faces significant disadvantages. The energy used to heat pitch and coke to the mixing temperature is pulled out again at subsequent cooling before and/or after green anode forming. Same energy has to be re-entered in the carbonisation (baking) furnace simply blocking part of the furnace's capacity.

Water added for paste cooling prior to anode forming evaporates. The steam is charged with pitch volatiles containing PAHs and has to be treated for PAH removal by thermal oxidation. Paste cooling before uniaxial pressing is necessary to avoid sticking of the paste to the mould and to ensure mechanical stability of the compacted paste. Hot green anodes are too weak for handling as the binder pitch is softening. When using vibro-compactors for anode forming the cooling by spraying or water-bathing the green anode is needed after pressing to ensure sufficiently high anode strength for transport and mechanical handling. Also deformation by the load of anode layers placed on top in the baking (carbonisation) furnace has to be avoided. Again the heat energy trapped in the green anode cannot be recovered.

US 4 188 279 A describes a composition for the production of shaped carbon articles which comprises a homogeneous blend of solid carbonaceous particles, binder pitch and an additive selected from inorganic and organic phosphorous-containing and boron-containing compounds. Electrodes produced using these compositions exhibit lower consumption of electrode mass and increased density and crushing strength after carbonization.

Adhesion Science and Engineering-2 "Surfaces, Chemistry and Applications", chapter 13, pages 612-615 describes methods for the determination of the softening points of resins.

Thomas A. Golubic et al: "High softening point coal tar pitches as anode binder pitch" Light metals 2010, p. 909-911 describes that properties as quinoline insolubles, toluene insolubles, coking value and specific gravity increase with increasing softening point of a pitch, while its polynuclear aromatic hydrocarbon (PAH) content decreases. A significant polynuclear aromatic hydrocarbon content reduction of 50 % or more is not achieved until the softening point of the pitch reaches approximately 150°C.

US 5 688 155 A describes a carbon-carbon composite structure which utilizes a particular pitch as matrix material, whose aromatic components have been polymerized and cross-linked to such an extent that it is poorly graphitizable or even totally ungraphitizable. The use of such a pitch in a carbon-carbon composite structure, particularly carbon electrodes, improves the electrical and thermal properties thereof.

### SUMMARY OF THE INVENTION

It would be highly desirable to eliminate the cooling step simplifying the known anode forming methods of carbon molded articles, in particular carbon electrodes. The object of the invention is the provision of a process which allows avoiding the cooling steps after the mixing of the pitch/coke paste and/or after forming of the green anode.

This object is achieved by a process for the manufacture of carbon electrodes of the kind of anodes for aluminium production or other carbon bodies (artefacts) of the kind of anodes for aluminium production comprising the steps of
(a) mixing a high melting pitch with a softening point Mettler (SPM) above 150°C with a carbonaceous solid at a temperature of 50°C to 120°C above the SPM of the pitch, pressing or compacting by vibration or extrusion without intentional cooling at a temperature close to the mixing temperature, in order to obtain green electrodes or green artefacts,
(b) transferring the green artefacts to a carbonization furnace without intentional cooling,
(c) carbonizing the green artefacts.

The process of the invention does not need a cooling of the pitch/coke paste after mixing and/or the green electrode after forming, thus, the heat trapped in the green electrode can be conserved and reduces the total energy consumption and residence time in a subsequent carbonization step.

The invention is based on the finding that green anodes from a high-melting pitch prove to be stronger than expected. Surprisingly hot anodes made from high-melting pitches - even at a temperature above the SPM - are extremely resistant to deformation and can be mechanically handled without substantial deformation of the hot green molded carbon article. For the purpose of the invention the term artefacts comprises carbon electrodes and other formed carbon articles.

### DETAILED DESCRIPTION OF THE INVENTION

Coal tar pitch is obtained as a product of coal tar distillation. Pitch is a black, thermoplastic material, which essentially includes compounds volatile above 400 °C and non-vaporizable compounds of the tar. Typical electrode binder pitch can be obtained by vacuum distillation to SPM 105-120°C. A high-melting pitch used in the invention has a SPM of above 150 °C, preferable above 165 °C and most preferably above 175 °C. A high temperature pitch is known and described in W. Boenigk, C. Boltersdorf, F. Lindner, J. Stiegert, "Property profile of lab-scale anodes produced with 180°C Mettler coal tar pitch", Light Metals, 889-893 (2011). A preferred method to produce such high-melting pitches is described, for example, in US 5 262 043.

The carbonaceous solid component suitable for the process of the invention can be calcined petroleum coke, coal tar pitch coke, needle coke and other purified carbon carriers including recycled carbon material (e.g. anode butts). The production of coke is known for many years. Preferably a petroleum coke or needle coke is used in the process of the invention. For the coke grain size the invention has no specific requirements. Accordingly, the skilled person will use carbonaceous solids with particle sizes as in the known processes. The amount of pitch in the mixture of pitch and carbonaceous solid typically can be in the range of 10% to 20% by weight, preferably 13% to 18% by weight, the amount of carbonaceous solids is between 80% and 90% by weight, preferably 82% and 87% by weight, based on the weight of the mixture.

In the process of the invention the pitch and coke components are mixed using known processes. The mixing temperature basically depends on the softening point Mettler (SPM) of the pitch used in the process. Preferably the mixing temperature will be 60°C to 100 °C above the SPM of the pitch.

Suitable mixing devices for the purpose of the invention are mixers which allow to keep or to bring the pitch/carbonaceous solide-mixture to the aforementioned temperature. For the example, a so-called EIRICH high-temperature intensive mixer, provided by Eirich GmbH & Co. KG, Germany is particularly suited for the process of the invention. This mixer allows mixing temperatures of about 300 °C.

Alternatively the coke is preheated to a temperature above mixing temperature allowing excess heat to be transferred to the pitch while mixing.

The product from the mixing step is a paste which according to the invention is not subjected to cooling as in the state of the art processes. Thus, the hot mix (paste) can be transferred to a mould and is compacted therein. The green body released after compressing from the mould is placed in a baking furnace without the cooling step of the state of the art processes at this stage.

Also the process in the baking furnace is known. Generally the temperature in the furnace is gradually increased to about 1100 °C. The hot charging of the baking furnace according to the invention allows a faster increase of temperature in the temperature range up to 300°C.

Accordingly neither the paste obtained after mixing of the pitch and the coke components nor the green carbon body released from the mould is cooled with water. In the process of the invention a water cooling step can be omitted.

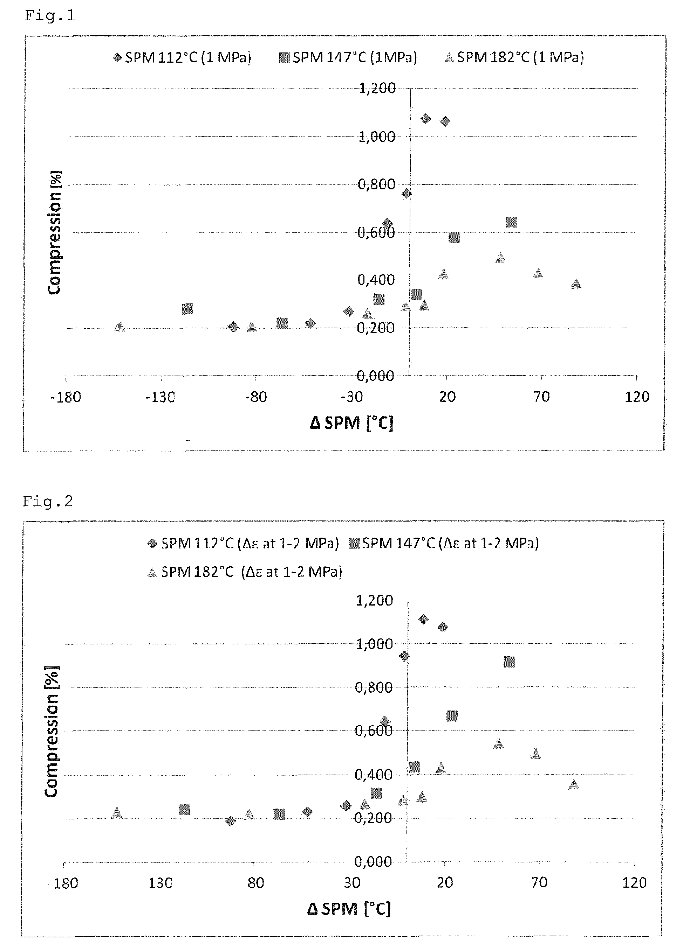

With reference to Figures 1 and 2 the advantageous properties of the green anodes obtained according to the invention are demonstrated.
**Fig. 1** shows the compression deformation [%] against delta between testing temperature and SPM of the pitch at 1 MPa load for several pitches.
**Fig. 2** shows Compression deformation [%] against delta to SPM between 1 and 2 MPa load for several pitches.

The measured compression is depicted against the softening point of the pitch in Fig. 1 and 2 to allow a direct comparison. All green anodes are rigid when cooled to minimum 30°C below the SPM of the pitch. At the respective SPM increasing the load from 1 MPa to 2 MPa causes a compression of nearly 1% for SPM 112°C against 0.4% for SPM 147°C whereas the SPM 182°C is still in the range of the rigid anode (<0.3%). Further increasing of the temperature to the forming temperature starts floating of the SPM 112°C anode, whereas an anode from SPM 147°C reaches the 1% compression. The unexpected resistance of the SPM 182°C anode is confirmed as it does not exceed 0.5% compression when loading with 1MPa and 0.55% between 1 to 2 MPa.

Obviously the surprising effect of high rigidity of hot green anodes starts at pitch SPM above 150°C. Making use of high-melting pitch makes it for the first time possible to produce anodes without any cooling of the paste after mixing. The load used in these examples exceeds the load exercised when handling anodes between pressing and positioning in the baking furnace. Thus the hot mix can be immediately transferred to a mould, compacted and the green body can - again without cooling - be placed in a baking furnace without mechanical damage. This not only provides savings in the forming process but also helps to reduce energy consumption in the baking furnace. When hot handling is possible, the trapped heat can be conserved for the baking furnace significantly improving the furnace capacity by reducing the cycle time.

Finally it can be concluded that the use of high-melting pitch significantly improves green anode strength even at and above the pitch softening temperature. This is the property that allows to avoid anode cooling with all its negative implications.

The method of the invention to avoid paste cooling is equally applicable to the production of other carbonaceous artefacts using pitch coke, needle coke or other carbonaceous solids.

The process of the invention is extremely advantageous because the energy used for heating the anode paste is not lost by cooling, no water is consumed for cooling purposes, water contamination with Polycyclic Aromatic Hydrocarbons (PAHs) is avoided, no green anode storage for cooling is necessary, heating of the baking furnace is much quicker as the anodes are already heated to the core, less volatiles of high-melting pitch allow a faster carbonization cycle increasing furnace throughput further, pitch with a low volatility improves the occupational situation (less PAHs), high shape stability prevents stud-hole slumping. These advantages finally provide a better carbon footprint of the process.

The following examples serve to further illustrate the invention.

### EXAMPLES

### Example 1 (comparative)

Green carbon anodes (50 mm Ø; 100-110 mm long) were produced by mixing 84% petroleum coke (containing 20% anode butts) and 16 % electrode binder pitch SPM 112°C, coking value 58.3% (ISO 6998); QI 7.7 % (ISO 6791); TI 27.4% (ISO 6376) until 210°C is reached and subsequent pressing at 600 bar. The apparent green density is 1.695 g/cm³. The anodes are cut in pieces of 50 mm Ø, 50 mm long. The cold crushing strength of the green anode is 26.4 MPa. The green anode samples were pre-heated to distinct temperatures and subjected to controlled loading as described below.

The load and the corresponding deformation are recorded in Table 1. The values were obtained with a Frank Universal testing machine (Type 81806/B, 20 kN load cell, testing speed 7.5 mm/min).

**Tab. 1: Deformation (ε) of anodes (16% binder pitch SPM 112°C) under loading conditions**

| Temp. [°C] | Δ SPM | ε (1 MPa) [%] | σ [%] | Δε (1-2 MPa) [%] | σ [%] |
|---|---|---|---|---|---|
| 20 | -92 | 0,204 | 0,026 | 0,185 | |
| 60 | -52 | 0,220 | 0,015 | 0,227 | 0,014 |
| 80 | -32 | 0,267 | 0,030 | 0,257 | 0,017 |
| 100 | - 12 | 0,637 | 0,127 | 0,642 | 0,226 |
| 110 | -2 | 0,759 | 0,093 | 0,944 | 0,111 |
| 120 | 8 | 1,074 | 0,074 | 1,111 | 0,086 |
| 130 | 18 | 1,062 | 0,339 | 1,074 | 0,280 |

The results in table 1 demonstrate that hot green anodes are sensitive to deformation. The compressive strain decreases as expected when cooling whereas the anode is plastic at and above pitch SPM. The standard deviation is significantly reduced as soon as 80 °C (∼30 °C below SPM) are reached and a rigid anode is obtained that can be handled in the further process steps. Just cooling the outer surface is not sufficient for handling as the heat energy stored in the pressed green anode core is sufficient to heat-up the shell again. These results confirm the need for anode cooling to a minimum of 30 °C below SPM. The maximum tolerable temperature may slightly vary depending on a plant's equipment. The tendency of a green carbon anode to bulge not only affects the outer shape but also increases the risk of stud-hole slumping.

### Example 2 (invention)

Green anodes were shaped after mixing 16% electrode binder (SPM 182°C, coking value 76.1%; QI 14.5%; TI 43.7%; no mesophase particles detectable under polarized light), produced by vacuum distillation at 1 mbar and 84% petroleum coke recipe (containing 20% anode butts) to 280°C. The apparent green density is 1.694 g/cm³. The crushing strength of the green anode at room temperature turned out to be surprisingly high at 34.9 MPa. The binding capability of this high-melting binder is obviously considerably higher than the standard pitch tested before. Testing of high-temperature deformation properties was repeated with these anodes in a similar way (Table 2).

**Tab. 2: Deformation of anodes (ε) (16% binder pitch SPM 182°C) under loading conditions**

| Temp. [°C] | Δ SPM | ε (1 MPa) [%] | σ [%] | Δε (1-2 MPa) [%] | σ [%] |
|---|---|---|---|---|---|
| 30 | -152 | 0,211 | | 0,228 | |
| 100 | -82 | 0,209 | 0,028 | 0,219 | 0,023 |
| 160 | -22 | 0,259 | 0,023 | 0,263 | 0,263 |
| 180 | -2 | 0,291 | 0,067 | 0,284 | 0,057 |
| 190 | 8 | 0,296 | | 0,296 | |
| 200 | 18 | 0,424 | 0,047 | 0,430 | 0,130 |
| 230 | 48 | 0, 494 | 0,086 | 0,543 | 0,086 |
| 250 | 68 | 0,430 | 0,095 | 0,494 | 0,137 |
| 270 | 88 | 0,385 | | 0,356 | |

Green anodes from SPM 182°C pitch prove to be stronger than expected. Surprisingly even at a temperature above the SPM the anodes are extremely resistant to deformation. Maximum compression is below 0.5% (1 MPa load) even at mixing temperature. A comparable rigidity is achieved for state-of-the-art pitches well below their SPM thus requesting cooling. For SPM 182°C pitch no single value exceeds the deformation level of 0.5% at 1 MPa load.

### Example 3 (comparative)

To find out whether pitches with SPM between 112°C and 182°C behave in a similar way as the pitch of example 2, a pitch with SPM 146.5°C (coking value 67.6%, QI 10.5%, TI 36.6%, no mesophase particles) was chosen. The anodes were treated as described in examples 1 and 2. The results are presented in Table 3. The results in Table 3 show that anodes produced using this pitch have much less deformation resistance when heated above the SPM compared to the pitch in Tab. 2.

**Tab. 3: Deformation of anodes (ε) (16% binder pitch SPM 146.5°C) under loading conditions**

| Temp. [°C] | Δ SPM | ε (1 MPa) [%] | σ [%] | Δε (1-2 MPa) [%] | σ [%] |
|---|---|---|---|---|---|
| 30 | -117 | 0,278 | | 0,241 | |
| 80 | -67 | 0,222 | 0,059 | 0,219 | 0,023 |
| 130 | -17 | 0,317 | 0,008 | 0,317 | 0,008 |
| 150 | 4 | 0,341 | 0,013 | 0,433 | 0,106 |
| 170 | 24 | 0,578 | 0,053 | 0,667 | 0,021 |
| 200 | 54 | 0,642 | 0,034 | 0,919 | 0,258 |

The results of examples 1-3 are compiled in Figs. 1 and 2.

## Claims

1. Process for the manufacture of carbon electrodes of the kind of anodes for aluminium production or other carbon artefacts of the kind of anodes for aluminium production comprising the steps of
(a) mixing a high melting pitch with a softening point Mettler (SPM) above 150°C with carbonaceous solids at a temperature of 50°C to 120°C above the SPM of the pitch, pressing or compacting by vibration or extrusion without intentional cooling at a temperature close to the mixing temperature, in order to obtain green electrodes or green artefacts,
(b) transferring the green electrodes or green artefacts to a carbonization furnace without intentional cooling,
(c) carbonizing the green electrodes or green artefacts.

2. Process according to claim 1, wherein the pitch is a coal tar pitch or an aromatic petroleum pitch.

3. Process according to claim 1 or 2, wherein the pitch is a coal tar pitch having a content of EPA polycyclic aromatic hydrocarbons (PAH) of not more than 1.5 %.

4. Process according to one of the preceding claims, wherein the pitch is a coal tar pitch having a SPM of above 170 °C, in particular above 180 °C or above 200°C.

5. Process according to one of the preceding claims, wherein the content of EPA PAHs is not more than 0.5 %

6. Process according to one of the preceding claims, wherein the carbonaceous solid is a calcined petroleum coke, a needle coke or a pitch coke.

7. Process of one of the preceding claims wherein the artefacts are anodes for the alumina electrolysis.

8. Process of one of the preceding claims wherein said artefacts are electrodes for steel production in electric arc furnaces.

## Patentansprüche

1. Verfahren zur Herstellung von Kohlenstoffelektroden in der Art von Anoden für die Aluminiumproduktion oder von anderen künstlich hergestellten Kohlenstoffteilen in der Art von Anoden für die Aluminiumproduktion, welches die Stufen:
a) Vermischen eines hochschmelzenden Pechs mit einem Erweichungspunkt nach Mettler (SPM) von über 150 °C mit kohligen Feststoffen bei einer Temperatur von 50 °C bis 120 °C oberhalb des SPM des Pechs, Pressen oder Kompaktieren durch Vibration oder Extrusion ohne erzwungene Kühlung bei einer Temperatur von nahe der Mischungstemperatur, um Rohelektroden oder künstlich hergestellte Rohteile zu erhalten,
b) Bringen der Rohelektroden oder künstlich hergestellten Rohteile ohne erzwungene Kühlung in einen Carbonisierungsofen und
c) Carbonisieren der Rohelektroden oder künstlich hergestellten Rohteile
umfasst.

2. Verfahren nach Anspruch 1, wobei das Pech ein Kohlenteerpech oder aromatisches Erdölpech ist.

3. Verfahren nach Anspruch 1 oder 2, wobei das Pech ein Kohlenteerpech mit einem Gehalt an EPA polycylischen aromatischen Kohlenwasserstoffen (PAH) von nicht mehr als 1,5 % ist.

4. Verfahren nach einem der vorhergehenden Ansprüche, wobei das Pech ein Kohlenteerpech mit einem SPM von über 170 °C und insbesondere über 180 °C oder über 200 °C ist.

5. Verfahren nach einem der vorhergehenden Ansprüche, wobei der Gehalt an EPA PAHs nicht mehr als 0,5 % beträgt.

6. Verfahren nach einem der vorhergehenden Ansprüche, wobei der kohlige Feststoff ein calcinierter Petrolkoks, ein Nadelkoks oder Pechkoks ist.

7. Verfahren nach einem der vorhergehenden Ansprüche, wobei die künstlich hergestellten Teile Anoden für die Aluminiumoxidelektrolyse sind.

8. Verfahren nach einem der vorhergehenden Ansprüche, wobei die künstlich hergestellten Teile Elektroden für die Stahlerzeugung in einem Lichtbogenofen sind.

## Revendications

1. Procédé pour la fabrication d'électrodes de carbone du type d'anodes pour la production d'aluminium ou pour la fabrication d'autres artefacts de carbone du type d'anodes pour la production d'aluminium, comprenant les étapes consistant :
(a) à mélanger un brai à point de fusion élevé ayant un point de ramollissement Mettler (SPM) supérieur à 150°C, avec des solides carbonés, à une température comprise entre 50°C et 120°C au-dessus du point de ramollissement SPM du brai, à comprimer ou à compacter par vibration ou par extrusion, sans refroidissement intentionnel, à une température proche de la température de mélange, afin d'obtenir des électrodes vertes ou artefacts verts,
(b) à transférer les électrodes vertes ou artefacts verts jusqu'à un four de carbonisation, sans refroidissement intentionnel,
(c) à carboniser les électrodes vertes ou artefacts verts.

2. Procédé selon la revendication 1, dans lequel le brai est un brai de goudron de houille ou un brai de pétrole aromatique.

3. Procédé selon la **revendication** 1 ou 2, dans lequel le brai est un brai de goudron de houille ayant une teneur en hydrocarbures aromatiques polycycliques (PAH) classés par l'EPA, non supérieure à 1,5 %.

4. Procédé selon l'une quelconque des revendications précédentes, dans lequel le brai est un brai de goudron de houille ayant un point de ramollissement SPM supérieur à 170°C, en particulier supérieur à 180°C ou supérieur à 200°C.

5. Procédé selon l'une quelconque des revendications précédentes, dans lequel la teneur en hydrocarbures PAH classés par l'EPA n'est pas supérieure à 0,5 %.

6. Procédé selon l'une quelconque des revendications précédentes, dans lequel le solide carboné est un coke de pétrole calciné, un coke aciculaire ou un coke de brai.

7. Procédé selon l'une quelconque des revendications précédentes, dans lequel les artefacts sont des anodes pour l'électrolyse de l'alumine.

8. Procédé selon l'une quelconque des revendications précédentes, dans lequel lesdits artefacts sont des électrodes pour la production d'acier dans des fours à arc électrique.
